Europäisches Patentamt

European Patent Office

Office européen des brevets

(19)

(11) Veröffentlichungsnummer: **0 196 352**
**A1**

(12) # EUROPÄISCHE PATENTANMELDUNG

(21) Anmeldenummer: 85104096.4

(22) Anmeldetag: 04.04.85

(51) Int. Cl.⁴: **F 04 D 29/58**
F 04 D 19/00, F 16 C 37/00
F 16 C 27/04

(43) Veröffentlichungstag der Anmeldung:
08.10.86 Patentblatt 86/41

(84) Benannte Vertragsstaaten:
CH DE FR GB LI

(71) Anmelder: Leybold-Heraeus GmbH
Bonner Strasse 498 Postfach 51 07 60
D-5000 Köln 51(DE)

(72) Erfinder: Caspar, Hans-Peter
Spicher Strasse 7
D-5210 Troisdorf(DE)

(72) Erfinder: Schütz, Günter
Luisenstrasse 2 A
D-5000 Köln 21(DE)

(74) Vertreter: Leineweber, Jürgen, Dipl.-Phys.
Am Heidstamm 78 a
D-5000 Köln 40(DE)

(54) **Turbomolekular-Vakuumpumpe mit einem Rotor und mindestens einem Wälzlager.**

(57) Die Erfindung bezieht sich auf eine Turbomolekular-Vakuumpumpe (1) mit einem Rotor (6) und mit mindestens einem Wälzlager (17) für den Rotor, wobei sich der feststehende Lagerring (19) des Wälzlagers auf der Wandung einer Hülse (21) abstützt, welche sich ihrerseits über mindestens zwei Rundschnurringe (26, 27) aus elastischem Werkstoff auf einen Gehäuseteil (13) der Pumpe abstützt; zur Verbesserung des Wärmeflusses von der Hülse (21) zum Gehäuse der Pumpe ist der von zwei Dichtringen (26, 27), der Hülse (21) und dem Pumpengehäuse (13) gebildete Ringraum (29) mit einem den Wärmefluß von der Hülse zum benachbarten Gehäuseteil unterstützenden Mittel (31) gefüllt.

FIG.1

Turbomolekular-Vakuumpumpe mit einem Rotor und mindestens einem Wälzlager

Die Erfindung bezieht sich auf eine Turbomolekular-Vakuumpumpe mit einem Rotor und mindestens einem Wälzlager für den Rotor, wobei sich der feststehende Lagerring des Wälzlagers auf der Wandung einer Hülse abstützt, welche sich ihrerseits über mindestens zwei Rundschnurringe oder O-Ringe aus elastischem Werkstoff auf einen Gehäuseteil der Pumpe abstützt.

Es ist bekannt, Wälzlager einer Turbomolekularpumpe mit Schmieröl zu versorgen, das über einen zentralen Kanal in der Rotorwelle zu den Lagern geführt wird (DE-OS 22 63 612). Das untere Ende der Welle ragt in einen Schmiermittelraum und ist als Zentrifugalpumpe ausgebildet. Das im Kreislauf zu den Lagerungen geförderte Öl hat nicht nur die Funktion, die Lagerungen zu schmieren; es dient darüber hinaus noch der Abführung der Wärme, die im Bereich der Lagerungen entsteht. Nachteilig an der vorbekannten Turbomolekularpumpe ist, daß sie nur in vertikaler Lage einsetzbar ist.

Um diesen Nachteil zu beheben und um schnellere Drehzahlen zu erreichen, ist man bereits dazu übergegangen, Turbomolekular-Vakuumpumpen mit fettgeschmierten Wälzlagern auszurüsten. Als besonders vorteilhaft haben sich dabei Spindellagerungen erwiesen, die sich mittels einer äußeren Hülse über Rundschnurringe oder O-Ringe aus elastischem Werkstoff auf dem Gehäuse der Pumpe abstützen (DE-OS 30 39 196). Der besondere Vorteil dieser Anordnung besteht darin, daß die Übertragung von Vibrationen von den Lagerungen auf das Gehäuse stark gedämpft und damit die Probleme des überkritischen Laufs erheblich reduziert sind. Nachteilig an der beschriebenen Lösung ist jedoch, daß die O-Ringe, die aus schlechtwärmeleitendem Werkstoff bestehen, die Abfuhr der Wärme behindern.

Der vorliegenden Erfindung liegt die Aufgabe zugrunde, eine Turbomolekular-Vakuumpumpe der eingangs genannten Art zu schaffen, bei der trotz des Vorhandenseins einer O-Ring-Dämpfung die Abfuhr der Wärme von der Lagerung auf das Pumpengehäuse nicht mehr behindert ist.

Erfindungsgemäß wird diese Aufgabe dadurch gelöst, daß der von zwei Dichtringen, der Hülse und dem Pumpengehäuse gebildete Ringraum mit einem den Wärmefluß von der Hülse zum benachbarten Gehäuseteil unterstützenden Mittel gefüllt ist. Solche Mittel können z. B. gewellte, relativ dünne und dadurch flexible Blechpackungen oder Metallwolle sein, z. B. aus Kupfer oder Bronze. Besonders zweckmäßig sind jedoch flüssige und/oder gasförmige Medien. Diese haben den Vorteil, daß sie eine gute Wärmeleitfähigkeit besitzen und damit die Wärme, nicht aber die Vibrationen der Lagerhülse auf das Gehäuse der Turbomolekular-Vakuumpumpe übertragen. Dichte Gase (z. B. $SF_6$) oder auch Öle sind besonders geeignet. In vielen Fällen reicht es bereits aus, den von den Dichtringen, der Lagerhülse und dem Pumpengehäuse gebildeten Zwischenraum mit der Atmosphäre zu verbinden, so daß sich darin Luft unter Atmosphärendruck befindet.

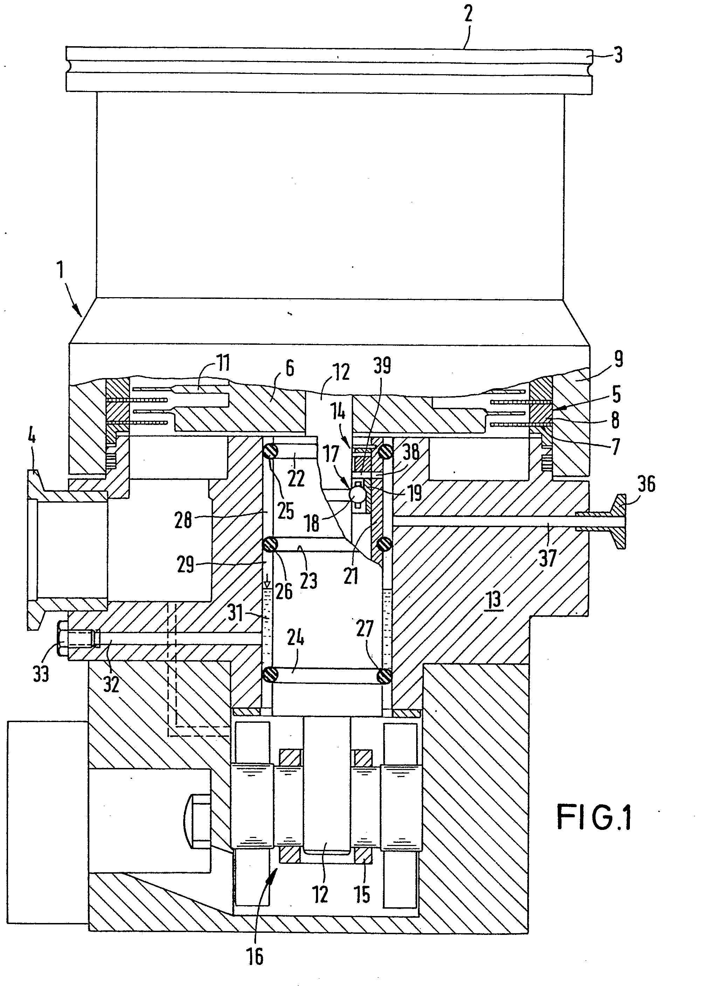

Weitere Vorteile und Einzelheiten der Erfindung sollen anhand von in den Figuren 1 bis 3 dargestellten Ausführungsbeispielen erläutert werden.

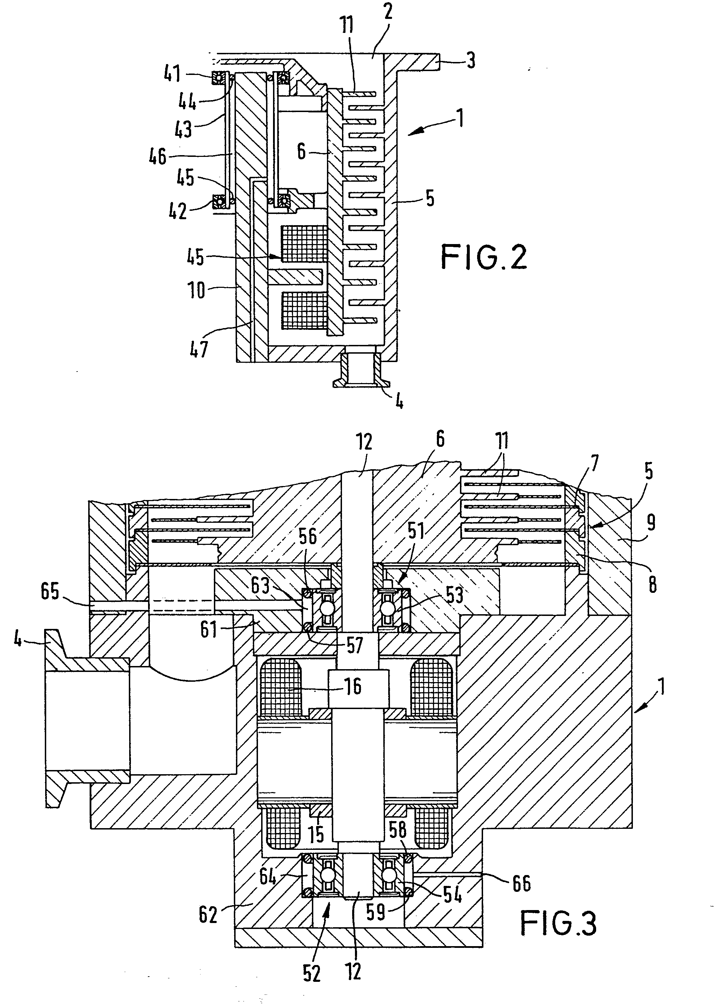

Bei den dargestellten Turbomolekular-Vakuumpumpen 1 sind der Einlaß mit 2, der Einlaßflansch mit 3 und der Auslaßstutzen mit 4 bezeichnet. Stator 5 und Rotor 6 sind jeweils nur teilweise dargestellt. Der Stator 5 besteht aus Statorschaufelringen 7, zwischen denen sich Abstandsringe 8 befinden. Das aus den Schaufelringen 7 und Abstandsringen 8 gebildete System wird vom im wesentlichen zylindrisch gestalteten Gehäuseabschnitt 9 zusammengehalten. Beim schematisch dargestellten Ausführungsbeispiel nach Figur 2 sind diese Einzelheiten nicht gesondert dargestellt.

Bei den Ausführungsbeispielen nach den Figuren 1 und 3 ist der Rotor 6 gemeinsam mit seinen Rotorschaufeln 11 einstückig ausgebildet und auf der Welle 12 befestigt. Beim Ausführungsbeispiel nach Figur 2 stützt sich der Rotor 6 auf einem zentralen, feststehenden Zapfen 10 ab.

Beim Ausführungsbeispiel nach Figur 1 ist die Welle 12 im Gehäuseteil 13 der Turbomolekular-Vakuumpumpe mittels einer Spindellagerung 14 gelagert. Auf das untere Ende der Welle 12 ist der Anker 15 des Antriebsmotors 16 befestigt.

Die Spindellagerung 14 ist in der DE-OS 30 39 196 offenbart. Sie umfaßt zwei Wälzlager 17 (nur eines ist sichtbar), deren Wälzkörper 18 unmittelbar auf der Welle 12 abrollen. Der feststehende Lagerring 19 stützt sich auf der Innenwand einer Hülse 21 ab. Auf ihrer Außenseite ist die Hülse 21 mit drei Ringnuten 22, 23 und 24 für die Dichtringe 25, 26 und 27 ausgerüstet. Über die in die Nuten eingelegten Dichtringe stützt sich die Spindellagerung 14 derart im Gehäuseteil 13 der Turbomolekular-Vakuumpumpe ab, daß zwei Ringräume 28 und 29 gebildet sind. Beim dargestellten Ausführungsbeispiel ist der Ringraum 29 teilweise mit einer Flüssigkeit 31 (z. B. Öl) gefüllt. Die Füllung erfolgt über den Kanal 32, der den Ringraum 29 mit der Umgebung verbindet und dessen äußere Mündung mit der Schraube 33 verschließbar ist. Die Flüssigkeit 31 sorgt für die Abfuhr der Wärme von der Hülse 21 auf das Gehäuseteil 13, so daß eine unzulässig starke Erwärmung insbesondere der Wälzlager 17 vermieden ist.

Beim　　　Ausführungsbeispiel nach Figur 1 sind insgesamt drei Dichtringe 25, 26 und 27 vorgesehen, so daß zwei Ringräume 28 und 29 vorhanden sind. Der Ringraum 28 dient als Ringkanal für eine Sperrgaszufuhr. Das Sperrgas hat die Aufgabe, oberhalb des oberen Wälzlagers 17 einen Druck aufrechtzuerhalten, der etwas über dem Vorvakuumdruck liegt, welcher im Lagerraum und Motorraum herrscht. Durch die Aufrechterhaltung des Sperrgasstromes kann vermieden werden, daß Schmiermitteldämpfe auf die Vorvakuumseite der Turbomolekular-Vakuumpumpe gelangen. Das Sperrgas wird über den Flansch 36 und die Bohrung 37 dem Ringraum 28 zugeführt. Oberhalb des oberen Wälzlagers 17 sind die Hülse 21 und der feststehende Lagerring 19 jeweils mit einer Bohrung 38 und 39 ausgerüstet. Durch diese Bohrungen strömt das Sperrgas auf die Druckseite der Vorvakuumpumpe und wird von der an den Flansch 4 angeschlossenen Vorvakuumpumpe abgepumpt.

Das Ausführungsbeispiel nach Figur 2 zeigt eine Turbomolekular-Vakuumpumpe, bei der sich der Rotor 6 über die Lagerungen 41 und 42, die Hülse 43 und die Dichtringe 44 und 45 auf einem feststehenden Zapfen 10 abstützt. Der Antrieb des Rotors 6 erfolgt über den Außenläufermotor 45. Um einen möglichst ungehinderten Wärmeübergang von der Hülse 43 auf den feststehenden Zapfen 10, der einen Teil des Gehäuses der Turbomolekular-Vakuumpumpe 1 bildet, zu erreichen, steht der von dem Zapfen 10, den Dichtringen 44 und 45 und der Hülse 43 gebildete Ringraum 46 über den Kanal 47 mit der umgebenden Atmosphäre in Verbindung.

Beim Ausführungsbeispiel nach Figur 3 ist die Welle 12 in zwei separaten Wälzlagern 51 und 52 gelagert, von denen sich je eines oberhalb und unterhalb des Antriebsmotors 15, 16 befindet. Die feststehenden Lagerringe 53 und 54 bilden gleichzeitig die Hülse und stützen sich über jeweils zwei Dichtringe 56, 57 bzw. 58, 59 in den jeweiligen Gehäuseteilen 61 und 62 ab. Dadurch entstehen Ringräume 63 und 64,

Turbomolekular-Vakuumpumpe mit einem Rotor und mindestens einem Wälzlager

PATENTANSPRÜCHE

1. Turbomolekular-Vakuumpumpe mit einem Rotor und mit mindestens einem Wälzlager für den Rotor, wobei sich der feststehende Lagerring des Wälzlagers auf der Wandung einer Hülse abstützt, welche sich ihrerseits über mindestens zwei Rundschnurringe aus elastischem Werkstoff auf einen Gehäuseteil der Pumpe abstützt, d a d u r c h   g e k e n n z e i c h n e t , daß der von zwei Dichtringen (26, 27; 44, 45; 56, 57; 58, 59), der Hülse (21, 43, 53, 54) und dem Pumpengehäuse (13, 10) gebildete Ringraum (29, 46, 63, 64) mit einem den Wärmefluß von der Hülse zum benachbarten Gehäuseteil unterstützenden Mittel gefüllt ist.

2. Turbomolekular-Vakuumpumpe nach Anspruch 1, d a d u r c h   g e k e n n z e i c h n e t , daß das den Wärmefluß unterstützende Mittel flüssig und/oder gasförmig ist.

3. Turbomolekular-Vakuumpumpe nach Anspruch 2, d a d u r c h   g e k e n n z e i c h n e t , daß der von zwei Rundschnurringen, der Hülse und dem Pumpengehäuse gebildete Ringraum teilweise mit einer Flüssigkeit, vorzugsweise Öl, gefüllt ist.

4. Turbomolekular-Vakuumpumpe nach Anspruch 2, d a d u r c h   g e k e n n z e i c h n e t , daß der Ringraum mit einem dichten Gas, z. B. $SF_6$, gefüllt ist.

5. Turbomolekular-Vakuumpumpe nach Anspruch 1, d a d u r c h   g e k e n n z e i c h n e t , daß der von zwei Rundschnurringen, der Hülse und dem Pumpengehäuse gebildete Ringraum (29, 46, 63, 64) mit einer Packung aus gewellten Blechen oder Metallwolle gefüllt ist.

6. Turbomolekular-Vakuumpumpe nach Anspruch 1 oder 2, d a d u r c h   g e k e n n z e i c h n e t ,   daß der Ringraum (29, 46, 63, 64) zur Atmosphäre hin offen ist.

7. Turbomolekular-Vakuumpumpe nach einem der vorhergehenden Ansprüche,   d a d u r c h   g e k e n n z e i c h - n e t ,   daß sich die Hülse (21) über drei Rundschnurringe (25, 26, 27) im Gehäuse der Turbomolekular-Vakuumpumpe abstützt, daß einer (29) der beiden dadurch gebildeten Ringräume (29, 28) das den Wärmefluß fördernde Mittel enthält und daß der andere (28) als Sperrgaszuführungskanal dient.

8. Turbomolekular-Vakuumpumpe nach Anspruch 7, d a d u r c h   g e k e n n z e i c h n e t ,   daß der als Sperrgaszuführungskanal dienende Ringraum (28) im Bereich des rotorseitigen Lagers (17) angeordnet ist und auf der Rotorseite des Lagers (17) mit dem Vorvakuumraum der Turbomolekular-Vakuumpumpe (Bohrungen 38, 39) in Verbindung steht.

9. Turbomolekular-Vakuumpumpe nach Anspruch 8, d a d u r c h   g e k e n n z e i c h n e t ,   daß der Zuführungskanal (37) für das Sperrgas auf der dem Rotor abgewandten Seite des Lagers (17) in den Ringraum (28) mündet.

10. Turbomolekular-Vakuumpumpe nach einem der vorhergehenden Ansprüche,   d a d u r c h   g e k e n n z e i c h n e t ,   daß die Hülse und der feststehende Lagerring, der sich über Rundschnurringe auf dem Gehäuse abstützt, ein identisches Bauteil (53, 54) ist.

0196352

11. Turbomolekular-Vakuumpumpe nach einem der vorhergehenden Ansprüche, d a d u r c h   g e k e n n -
z e i c h n e t , daß sie mit einer Wasser- oder Luftkühlung ausgerüstet ist.

FIG.1

FIG.2

FIG.3

85.002

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-A-2 730 552 (RIETER) <br><br> * Seite 3, Zeilen 1-7; Seite 5, Zeile 31 - Seite 7, Zeile 7; Abbildungen 1-10 * | 1-3,5,6 | F 04 D 29/58 <br> F 04 D 19/04 <br> F 16 C 37/00 <br> F 16 C 27/04 |
| | --- | | |
| Y | DE-A-2 144 307 (SPINNER OY) <br> * Seite 1, Zeilen 1,2; Zeile 17 - Seite 2, Zeile 7; Abbildung * | 1,2,10 | |
| | --- | | |
| Y,D | DE-A-3 039 196 (LEYBOLD HERAEUS) <br> * Abbildung * | 1-3,5,6,10 | |
| | --- | | |
| Y | GB-A-1 331 166 (PFEIFFER) <br> * Seite 1, Zeilen 10,11; Zeile 71 - Seite 2, Zeile 4; Zeilen 101-127; Abbildung 1 * | 1,2 | RECHERCHIERTE SACHGEBIETE (Int Cl 4) |
| | --- | | |
| A | DE-B-1 103 513 (BBC) <br> * Spalte 1, Zeilen 1-9; Spalte 2, Zeilen 35-42; Spalte 3, Zeilen 34-38; Abbildung * | 4 | F 04 D <br> F 16 C |
| | --- | | |
| A | US-A-2 391 670 (BAY) <br> * Seite 1, linke Spalte, Zeilen 19-37; Abbildungen 1-5 * | 1-5 | |
| | ---     -/- | | |

Der vorliegende Recherchenbericht wurde für alle Patentansprüche erstellt

| Recherchenort <br> DEN HAAG | Abschlußdatum der Recherche <br> 18-12-1985 | Prüfer <br> WALVOORT B.W. |
|---|---|---|

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | DE-A-2 408 256 (LEYBOLD-HERAEUS) * Seite 1, Zeilen 1-5; Seite 5, Zeilen 11-32; Abbildung 1 * | 7 | |
| | --- | | |
| A | DE-A-2 021 156 (TRW) * Seite 1, Zeilen 1-3; Seite 6, Zeile 26 - Seite 7, Zeile 8; Abbildung 1 * | 11 | |
| | ----- | | |

RECHERCHIERTE SACHGEBIETE (Int Cl 4)

Der vorliegende Recherchenbericht wurde für alle Patentansprüche erstellt

| Recherchenort DEN HAAG | Abschlußdatum der Recherche 18-12-1985 | Prüfer WALVOORT B.W. |
|---|---|---|